# EUROPÄISCHE PATENTSCHRIFT

(11) **EP 0 669 472 B1**
(45) Veröffentlichungstag und Bekanntmachung des Hinweises auf die Patenterteilung: **08.04.1998**
(21) Anmeldenummer: 95810011.7
(22) Anmeldetag: 05.01.1995
(51) Int. Cl.: F16B 19/14

(54) **Befestigungselement zum Eintreiben in harte Aufnahmematerialien mittels pulverkraftbetriebener Setzgeräte**
Fastening element for driving into hard materials by means of a powder-actuated setting tool
Elément de fixation pour l'enforcement dans des matériaux durs au moyen d'un outil actionné par la poudre

(30) Priorität: 21.02.1994 DE 4405410
(43) Veröffentlichungstag der Anmeldung: 30.08.1995
(73) Patentinhaber: HILTI Aktiengesellschaft, 9494 Schaan (LI)
(72) Erfinder: Janssen, Rupert, A-6812 Meiningen (AT); Fröwis, Markus, A-6820 Frastanz (AT)
(74) Vertreter: Wildi, Roland

(56) Entgegenhaltungen:
- CH-A- 442 177
- DE-C- 914 548
- GB-A- 1 166 301
- GB-A- 1 544 115

## Beschreibung

Die Erfindung betrifft ein Befestigungselement zum Eintreiben in harte Aufnahmematerialien mittels pulverkraftbetriebener Setzgeräte mit Schaft, der eintreibrichtungsseitig eine Spitze aufweist und an den sich entgegen der Eintreibrichtung ein Lastangriffsmittel mit einer den Schaft im Durchmesser überragenden Schulter anschliesst (GB-A 1 544 115).

Befestigungselemente der genannten Art werden zum Eintreiben in harte Aufnahmematerialien wie Beton, Mauerwerk, Gestein, Stahl und dgl. verwendet. Die Befestigungselemente werden dabei mittels pulverkraftbetriebener Setzgeräte in die harten Aufnahmematerialien eingetrieben. Ein bevorzugtes Anwendungsfeld für Befestigungselemente der hier in Rede stehenden Art ist die Befestigung von Anschlusskonstruktionen. Solche Anschlusskonstruktionen können beispielsweise in Form von Halteteilen ausgebildet sein, welche der Festlegung von Kabeln, Rohren, Isolierplatten, Abhängungen und dgl. dienen. Die Befestigung solcher Halteteile erfolgt in der Weise, dass sich nach erfolgtem Eintreibvorgang eine Schulter eines Lastangriffsmittels am Halteteil abstützt und dieses gegen das Aufnahmematerial spannt.

Das Lastangriffsmittel der Befestigungselemente kann beispielsweise als Kopf ausgebildet sein, welcher den Schaft im Durchmesser überragt. Anstelle eines Kopfes kann das Lastangriffsmittel auch als Gewindeteil, das den Durchmesser des Schaftes überragt, ausgebildet sein. Ein solches Gewindeteil kann zusätzlich zu seiner Schulterbildung noch der Aufnahme von Muttem oder dgl. dienen.

Anschlusskonstrukionen in Form von Halteteilen der hier in Rede stehenden Art bestehen zumeist aus Kunststoff, einerseits aus Gründen der Wirtschaftlichkeit und andererseits in gewissen Fällen auch aus Gründen der Isolation. Die Verwendung von Kunststoff als Material für die Halteteile schafft in Verbindung mit der hier zur Diskussion stehenden Art der Befestigung unter Verwendung pulverkraftbetriebener Setzgeräte gewisse Probleme. So muss gewährleistet sein, dass die Halteteile ausreichend gegen das Aufnahmematerial gespannt werden. Dies bedingt eine definierte Setztiefe der Befestigungselemente, so dass einerseits nicht die Gefahr einer unzureichenden Spannung oder andererseits nicht die Gefahr einer Zerstörung der Halteteile besteht.

Gerade bei der Befestigung unter Verwendung pulverkraftbetriebener Setzgeräte ist die Setztiefe der Befestigungselemente schwierig vorausbestimmbar. Dies einerseits aufgrund der meistens vorhandenen Inhomogenität des Aufnahmematerials und andererseits aufgrund der Schwankungen in der Energieabgabe der Verwendung findenden Treibladungen. Die Gefahr einer Zerstörung der Halteteile ist aufgrund dieser Problematik recht gross.

Der Erfindung liegt die Aufgabe zugrunde, ein mittels Pulverkraft betriebener Setzgeräte in harte Aufnahmematerialien eintreibbares Befestigungselement zu schaffen, mit welchem gewährleistet ist, dass die zu befestigenden Anschlusskonstruktionen in Form von Halteteilen einerseits ausreichend gegen das Aufnahmematerial gespannt und andererseits nicht zerstört werden.

Erfindungsgemäss wird die Aufgabe dadurch gelöst, dass der Schaft des Befestigungselementes entlang eines Teiles seiner Länge von einer Hülse umgeben ist und sich in Eintreibrichtung an einen mit dem lastangriffseitigen Ende der Hülse zusammenwirkenden Anschlag entlang eines Teiles der Hülse ein energieabsorbierendes Element anschliesst.

Während des Eintreibvorganges trifft die Schulter des Lastangriffsmittels am Anschlag der Hülse auf. Dies hat zur Folge, dass auch die Hülse gegen das Aufnahmematerial getrieben wird. Je nach vorhandener Überenergie wird auch die Hülse mehr oder weniger stark in das Aufnahmematerial eingetrieben. Dieses Hineintreiben der Hülse in das Aufnahmematerial führt noch zu einem weiteren Vorteil, welcher darin besteht, dass der Schaft zusätzlich geführt wird und dies trotz allfällig sich bildender Abplatzungen im Aufnahmematerial. Aufgrund des erfindungsgemäss vorgesehenen energieabsorbierenden Elementes wird die allfällige Überenergie aber derart abgebaut, dass auf das Halteteil keine schlagartigen, zu einer Zerstörung führenden Beanspruchungen einwirken.

Als Anschlag kann beispielsweise eine Rondelle Anwendung finden, die in üblicher Weise reibschlüssig auf dem Schaft angeordnet ist und im Durchmesser die Hülse überragt. Eine solche Rondelle kann zudem der Führung des Befestigungselementes in den pulverkraftbetriebenen Setzgeräten dienen.

Eine weitere Möglichkeit besteht darin, den Anschlag direkt an der Hülse anzuordnen und zwar in Form eines Flansches, welcher im Durchmesser die Aussenkontur der Hülse überragt. Auch ein solcher Flansch kann der Führung des Befestigungselementes in den pulverkraftbetriebenen Setzgeräten dienen.

Um mit dem Befestigungselement ausreichende Setztiefen zu erzielen, beträgt vorzugsweise die Länge der Hülse etwa das 0,3- bis 0,8-fache der Länge des Schaftes.

Zweckmässigerweise ist das energieabsorbierende Element als eine sich am Anschlag abstützende Buchse ausgebildet. Es spielt dabei keine entscheidende Rolle, ob der Anschlag zum Abstützen der Buchse als gesonderte Rondelle oder als direkt an der Hülse angeordneter Flansch ausgebildet ist.

Optimale Verhältnisse hinsichtlich Energieabsorbierung werden dann erreicht, wenn die Länge der Buchse zweckmässigerweise dem 0,3- bis 0,8-fachen der Länge der Hülse entspricht. Der von der Buchse nicht umgebene Teil der Hülse kann damit weitere Funktionen erfüllen.

Eine solche weitere Funktion der Hülse kann beispielsweise darin bestehen, dass diese zum Durchdringen der Anschlusskonstruktion in Form von Halteteilen vorgesehen ist. In einem solchen Falle stützt sich die Buchse vorzugsweise eintreibrichtungsseitig an einem Wulst der Hülse ab. Die gegenüberliegende Abstützung der Buchse erfolgt in genannter Weise am Anschlag, welcher als gesonderte Rondelle oder als Flansch der Hülse ausgebildet sein kann.

Darüber hinaus kann der von der Buchse nicht umgebene Teil der Hülse die Anschlusskonstruktion in Form von Halteteilen durchsetzen, wobei in diesem Falle zweckmässigerweise die Buchse sich eintreibrichtungsseitig an den von der Hülse durchsetzten Halteteilen abstützt.

Hinsichtlich Energieabsorbierung ist es von Vorteil, wenn die Buchse aus einem schlagzähen Kunststoff besteht. Insbesondere wirken sich die elastischen Eigenschaften eines solchen Kunststoffes in mehrfacher Hinsicht vorteilhaft aus.

Gemäss einer weiteren Ausführungsform der Erfindung ist zweckmässigerweise das energieabsorbierende Element von einem Kegel an der Aussenkontur der Hülse gebildet, wobei der Kegel mit einer Rondelle zusammenwirkt, die sich auf einem von der Hülse durchsetzten Halteteil abstützt. Auch bei dieser Ausführungsform des Befestigungselementes kann die Hülse in das Aufnahmematerial hineingetrieben werden. Dabei wird der Kegel an der Aussenkontur der Hülse in die sich auf dem Halteteil abstützende Rondelle eingetrieben, was zu einer weiteren Energieabsorbierung unter Verformung sowohl des Kegels als auch der Rondelle führt. Sowohl die Rondelle als auch der Anschlag, welcher wiederum als Rondelle oder als Flansch ausgebildet sein kann, dienen der Führung des Befestigungselementes in den pulverkraftbetriebenen Setzgeräten.

Die Erfindung wird nachstehend anhand von Zeichnungen beispielhaft erläutert. Es zeigen:
- Fig. 1: ein Befestigungselement gemäss Erfindung in setzbereitem Zustand mit Buchse als energieabsorbierendes Element;
- Fig. 2: ein weiteres Befestigungselement gemäss Erfindung in setzbereitem Zustand mit Buchse als energieabsorbierendes Element;
- Fig. 3: ein weiteres Befestigungselement gemäss Erfindung in setzbereitem Zustand mit einem weiteren energieabsorbierenden Element.

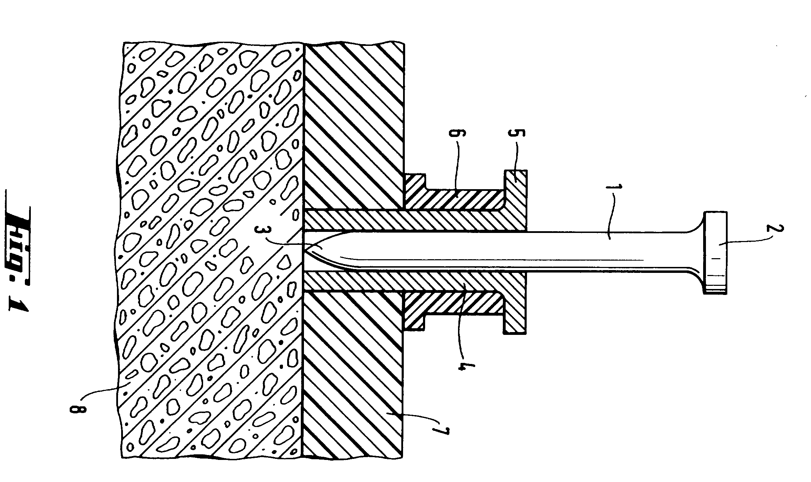

Fig. 1 zeigt ein Befestigungselement mit einem Schaft 1, an den sich entgegen der Eintreibrichtung ein als Kopf ausgebildetes Lastangriffsmittel 2 anschliesst. Der Schaft 1 ist eintreibrichtungsseitig mit einer Spitze 3 versehen.

Entlang eines Teiles seiner Länge ist der Schaft 1 von einer Hülse 4 umgeben. Das lastangriffseitige Ende der Hülse 4 weist einen als Flansch ausgebildeten Anschlag 5 auf. An diesen Anschlag 5 schliesst sich in Eintreibrichtung eine Buchse 6 als energieabsorbierendes Element an.

Die Hülse 4 durchsetzt im gezeigten Beispiel eine Anschlusskonstruktion in Form eines Halteteiles 7. Dieses Halteteil 7 wird an einem Aufnahmematerial 8 festgelegt, in welches der Schaft 1 des Befestigungselementes mit Spitze 3 sowie gegebenenfalls die Hülse 4 eindringen.

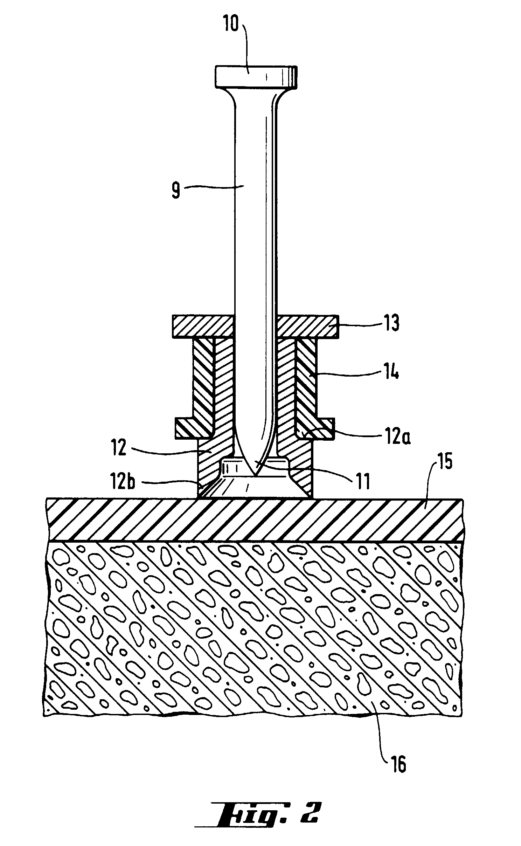

Das Befestigungselement entsprechend Fig. 2 besitzt einen Schaft 9, an den sich entgegen der Eintreibrichtung ein als Kopf ausgebildetes Lastangriffsmittel 10 anschliesst. Der Schaft 9 weist eintreibrichtungsseitig eine Spitze 11 auf.

Ein Teil der Länge des Schaftes 9 ist von einer Hülse 12 umgeben. Das lastangriffsmittelseitige Ende der Hülse 12 wirkt mit einem Anschlag 13 zusammen, welcher in Form einer gesonderten Rondelle ausgebildet ist.

Die Hülse 12 ist von einer Buchse 14 als energieabsorbierendes Element umgeben. Lastangriffseitig stützt sich die Buchse 14 am Anschlag 13 und eintreibrichtungsseitig an einem Wulst 12a der Hülse 12 ab.

Wie die Fig. 2 ferner zeigt, stützt sich die Hülse 12 vor dem Eintreibvorgang auf einer Anschlusskonstruktion in Form eines Halteteiles 15 ab. Während des Eintreibvorganges durchdringt die Spitze 11 des Befestigungselementes das Halteteil 15 und dringt in ein Aufnahmematerial 16 ein. Je nach vorhandener Energie dringt auch die Hülse 12 durch das Halteteil 15 hindurch und gegebenenfalls noch in das Aufnahmematerial 16 ein. Zu diesem Zweck ist die eintreibrichtungsseitige Stimseite der Hülse 12 als Schneide 12b ausgebildet.

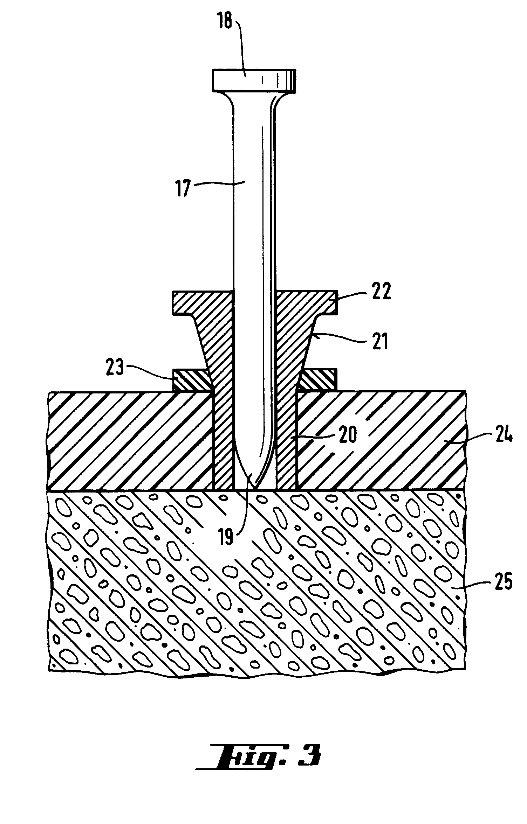

Das Befestigungselement entsprechend Fig. 3 besitzt einen Schaft 17, an den sich entgegen der Eintreibrichtung ein als Kopf ausgebildetes Lastangriffsmittel 18 anschliesst. Eintreibrichtungsseitig ist der Schaft 17 mit einer Spitze 19 versehen.

Über einen Teil seiner Länge ist der Schaft 17 von einer Hülse 20 umgeben. Diese Hülse 20 weist an der Aussenkontur einen Kegel 21 auf, der mit einer Rondelle 23 in Verbindung steht. Darüber hinaus ist das lastangriffseitige Ende der Hülse 20 mit einem Flansch 22 versehen.

Wie die Fig. 3 ferner zeigt, ist eine Anschlusskonstruktion in Form eines Halteteiles 24 vorgesehen, welches an einem Aufnahmematerial 25 festzulegen ist. Zu diesem Zwecke dringt während des Eintreibvorganges der Schaft 17 mit seiner Spitze 19 in das Aufnahmematerial 25 ein, wobei gegebenenfalls auch die das Halteteil 24 durchsetzende Hülse 20 in das Aufnahmematerial 25 eindringt. Dabei wirkt der Kegel 21 mit der Rondelle 23 zusammen, wobei eine Energieabsorbierung unter beidseitiger Materialverformung erfolgt.

## Patentansprüche

1. Befestigungselement mit Schaft zum Eintreiben in harte Aufnahmematerialien (8, 16, 25) mittels pulverkraftbetriebener Setzgeräte, wobei der Schaft (1, 9, 17) eintreibrichtungsseitig eine Spitze (3, 11, 19) aufweist und an den sich entgegen der Eintreibrichtung ein Lastangriffsmittel (2, 10, 18) mit einer den Schaft (1, 9, 17) im Durchmesser überragenden Schulter anschliesst, **dadurch gekennzeichnet,** dass der Schaft (1, 9, 17) entlang eines Teiles seiner Länge von einer Hülse (4, 12, 20) umgeben ist und sich in Eintreibrichtung an einen mit dem lastangriffseitigen Ende der Hülse (4, 12, 20) zusammenwirkenden Anschlag (5, 13, 22) entlang eines Teiles der Hülse (4, 12, 20) ein energieabsorbierendes Element (6) anschliesst.

2. Befestigungselement nach Anspruch 1, dadurch gekennzeichnet, dass der Anschlag (13) als den Schaft (9) umgebende, die Aussenkontur der Hülse (12) überragende Rondelle ausgebildet ist.

3. Befestigungselement nach Anspruch 1, dadurch gekennzeichnet, dass der Anschlag (5, 22) als mit der Hülse (4, 20) verbundener, deren Aussenkontur überragender Flansch ausgebildet ist.

4. Befestigungselement nach einem der Ansprüche 1 bis 3, dadurch gekennzeichnet, dass die axiale Länge der Hülse (4, 12, 20) dem 0,3- bis 0,8-fachen der Länge des Schaftes (1, 9, 17) entspricht.

5. Befestigungselement nach einem der Ansprüche 1 bis 4, dadurch gekennzeichnet, dass das energieabsorbierende Element eine die Hülse (4, 12) umgebende, sich am Anschlag (5, 13) abstützende Buchse (6, 14) ist.

6. Befestigungselement nach Anspruch 5, dadurch gekennzeichnet, dass die Länge der Buchse (6, 14) dem 0,3- bis 0,8-fachen der Länge der Hülse (4, 12) entspricht.

7. Befestigungselemet nach Anspruch 5 oder 6, dadurch gekennzeichnet, dass die Buchse (14) sich eintreibrichtungsseitig an einem Wulst (12a) der Hülse (12) abstützt.

8. Befestigungselement nach Anspruch 5 oder 6, dadurch gekennzeichnet, dass die Buchse (6) sich eintreibrichtungsseitig an einem von der Hülse (4) durchsetzten Halteteil (7) abstützt.

9. Befestigungselement nach einem der Ansprüche 5 bis 8, dadurch gekennzeichnet, dass die Buchse (6, 14) aus einem schlagzähen Kunststoff besteht.

10. Befestigungselement nach einem der Ansprüche 1 bis 4, dadurch gekennzeichnet, dass das energieabsorbierende Element von einem Kegel (21) an der Aussenkontur der Hülse (20) gebildet ist, wobei der Kegel (21) mit einer Rondelle (23) zusammenwirkt, die sich auf einem von der Hülse (20) durchsetzten Halteteil (24) abstützt.

## Claims

1. Fastening element with shaft for driving into hard receiving materials (8, 16, 25) by means of explosively actuated setting tools, and the shaft (1, 9, 17) comprises at the drive-in side a tip (3, 11, 19) and has adjacent thereto and against the drive-in direction a load-engaging means (2, 10, 18) with a shoulder which diametrically protrudes over the shaft (1, 9, 17), **characterised in that** the shaft (1, 9, 17) is along a portion of its length surrounded by a sleeve (4, 12, 20) and in the drive-in direction along a portion of the sleeve (4, 12, 20) succeeded on a stop (5, 13, 22), which co-operates with the load-engaging end of the sleeve (4, 12, 20), by an energy absorbing element (6).

2. Fastening element according to Claim 1, **characterised in that** the stop (13) is designed as a roundel which surrounds the shaft (9) and protrudes over the outside contour of the sleeve (12).

3. Fastening element according to Claim 1, **characterised in that** the stop (5, 22) is designed as a flange which is connected to the sleeve (4, 20) and protrudes over its outside contour.

4. Fastening element according to one of Claims 1 to 3, **characterised in that** the axial length of the sleeve (4, 12, 20) equals between 0.3 and 0.8 times the length of the shaft (1, 9, 17).

5. Fastening element according to one of Claims 1 to 4, **characterised in that** the energy absorbing element is a bush (6, 14) which surrounds the sleeve (4, 12) and supports itself against the stop (5, 13).

6. Fastening element according to Claim 5, **characterised in that** the length of the bush (6, 14) equals between 0.3 and 0.8 times the length of the sleeve (4, 12).

7. Fastening element according to Claim 5 or 6, **characterised in that** the bush (14) supports itself on the drive-in side against a bead (12a) of the sleeve (12).

8. Fastening element according to Claim 5 or 6, **characterised in that** the bush (6) supports itself on the drive-in side against a support element (7) which is passed through by the sleeve (4).

9. Fastening element according to one of Claims 5 to 8, **characterised in that** the bush (6, 14) is made of a knockresistant plastic material.

10. Fastening element according to one of Claims 1 to 4, **characterised in that** the energy absorbing element is formed on the outside contour of the sleeve (20) by a cone (21), and the cone (21) co-operates with a roundel (23) which supports itself against a support element (24) which is passed through by the sleeve (20).

## Revendications

1. Élément de fixation avec tige destiné à être enfoncé dans des matériaux récepteurs durs (8, 16, 25) au moyen d'outils de scellement actionnés par l'énergie de la poudre, la tige (1, 9, 17) comportant, du côté situé dans le sens d'enfoncement, une pointe (3, 11, 19) et étant prolongée, à l'opposé du sens d'enfoncement, d'un moyen d'application de force (2, 10, 18) présentant un épaulement dont le diamètre est supérieur à celui de la tige (1, 9, 17), caractérisé en ce que la tige (1, 9, 17) est entourée d'un manchon (4, 12, 20) sur une partie de sa longueur, et, dans le sens d'enfoncement, un élément d'absorption d'énergie (6) s'adapte, le long d'une partie du manchon (4, 12, 20), sur une butée (5, 13, 22) qui coopère avec l'extrémité du manchon (4, 12, 20) située côté application de la force.

2. Élément de fixation selon la revendication 1, caractérisé en ce que la butée (13) est conçue sous la forme d'une rondelle qui entoure la tige (9) et qui dépasse du contour extérieur du manchon (12).

3. Élément de fixation selon la revendication 1, caractérisé en ce que la butée (5, 22) est concue sous la forme d'un collet qui est relié au manchon (4, 20) et qui dépasse du contour extérieur de celui-ci.

4. Élément de fixation selon l'une des revendications 1 à 3, caractérisé en ce que la longueur axiale du manchon (4, 12, 20) correspond à 0,3 à 0,8 fois la longueur de la tige (1, 9, 17).

5. Élément de fixation selon l'une des revendications 1 à 4, caractérisé en ce que l'élément d'absorption d'énergie est une douille (6, 14) qui entoure le manchon (4, 12) et qui prend appui sur la butée (5, 13).

6. Élément de fixation selon la revendication 5, caractérisé en ce que la longueur de la douille (6, 14) correspond à 0,3 à 0,8 fois la longueur du manchon (4, 12).

7. Élément de fixation selon la revendication 5 ou 6, caractérisé en ce que la douille (14) prend appui, du côté situé dans le sens d'enfoncement, sur un bourrelet (12a) du manchon (12).

8. Élément de fixation selon la revendication 5 ou 6, caractérisé en ce que la douille (6) prend appui, du côté situé dans le sens d'enfoncement, sur une pièce de support (7) traversée par le manchon (4).

9. Élément de fixation selon l'une des revendications 5 à 8, caractérisé en ce que la douille (6, 14) est constituée d'une matière plastique résistante aux chocs.

10. Élément de fixation selon l'une des revendications 1 à 4, caractérisé en ce que l'élément d'absorption d'énergie est formé par un cône (21) sur le contour extérieur du manchon (20), le cône (21) coopérant avec une rondelle (23) qui prend appui sur une pièce de support (24) traversée par le manchon (20).
